# EUROPEAN PATENT SPECIFICATION

(11) **EP 4 125 195 B1**
(45) Date of publication and mention of the grant of the patent: **24.12.2025**
(21) Application number: 22186788.0
(22) Date of filing: 25.07.2022
(51) Int. Cl.: H02K 49/10, H02K 7/075

(54) **MAGNETIC DRIVING APPARATUS**
MAGNETISCHE ANTRIEBSVORRICHTUNG
APPAREIL D'ENTRAÎNEMENT MAGNÉTIQUE

(30) Priority: 27.07.2021 CN 202110850562
(43) Date of publication of application: 01.02.2023
(73) Proprietor: Chang, Li, Taichung City 407332 (TW)
(72) Inventor: Chang, Li, Taichung City 407332 (TW)
(74) Representative: Lang, Christian

(56) References cited:
- KR-A- 20100 099 070
- KR-A- 20120 035 123
- KR-A- 20130 036 496

## Description

### BACKGROUND OF INVENTION

### 1. FIELD OF INVENTION

The present invention relates to a magnetic driving apparatus and, more particularly, to a pole-switching unit for a magnetic driving apparatus.

### 2. RELATED PRIOR ART

A magnetic driving apparatus includes two active magnetic units and a passive magnetic unit. Each of active magnetic units includes an active magnet. The passive magnetic unit includes two passive magnets. One of the active magnets exerts magnetic push on one of the passive magnets while the remaining one of the active magnets exerts magnetic attraction on the remaining one of the passive magnets. To this end, the N pole of one of the active magnets is moved toward the N pole of one of the passive magnets while the S pole of the remaining one of the active magnets is moved toward the N pole of the remaining one of the passive magnets. Accordingly, the passive magnets are reciprocated. The reciprocation of the passive magnets can be converted into rotation of a generator for example. Document KR 2012 0 035 123 A describes a rotator power generating apparatus by a permanent magnet, which is provided to change a linear motion due to magnetic force into a rotational motion by using a crank shaft. Document KR 2013 0 036 496 A discloses a device for changing the polarity of a magnet attached to a rotary drum for generating a linear motion by a magnetic force in a connecting rod interlocking with a second magnet and converting the linear motion into a rotary motion using a crankshaft.

According to Lenz's Law, a change in a magnetic field induces a current that in turn acts against the change in the magnetic field. Hence, it requires an efficient device to move the active magnets.

The present invention is therefore intended to obviate or at least alleviate the problems encountered in the prior art.

### SUMMARY OF INVENTION

It is the primary objective of the present invention to provide an efficient magnetic apparatus.

To achieve the foregoing objective, a magnetic driving apparatus according to claim 1 is provided. Preferred embodiments are subject matter of the dependent claims. The magnetic driving apparatus includes a base, two active magnetic units, a passive magnetic unit, and a pole-switching unit. The first active magnetic unit includes a rotational magnet formed with a first magnetic pole and a second magnetic pole. The second active magnetic unit includes a rotational magnet formed with a first magnetic pole and a second magnetic pole. The passive magnetic unit includes two slidable magnets. The first slidable magnet includes a first magnetic pole facing the first active magnetic unit. The second slidable magnet includes a first magnetic pole facing the second active magnetic unit. The first magnetic pole of the rotational magnet of the first active magnetic unit exerts magnetic push on the first magnetic pole of the first slidable magnet while the second magnetic pole of the rotational magnet of the second active magnetic unit exerts magnetic attraction on the first magnetic pole of the second slidable magnet. The second magnetic pole of the rotational magnet of the first active magnetic unit exerts magnetic attraction on the first magnetic pole of the first slidable magnet while the first magnetic pole of the rotational magnet of the second active magnetic unit exerts magnetic push on the first magnetic pole of the second slidable magnet. The pole-switching unit includes a motor, a leading gear, two following gears, and a rack. The motor is connected to the base. The leading gear is operatively connected to the motor. The first following gear is connected to the rotational magnet of the first active magnetic unit. The second following gear is connected to the rotational magnet of the second active magnetic unit. The rack is engaged with the leading gear and the following gears so that the motor rotates the rotational magnets via the gears and the rack.

Other objectives, advantages and features of the present invention will be apparent from the following description referring to the attached drawings.

### BRIEF DESCRIPTION OF DRAWINGS

The present invention will be described via detailed illustration of six embodiment referring to the drawings wherein:
FIG. 1 is a perspective view of a magnetic driving apparatus according to the first embodiment of the present invention;
FIG. 2 is an exploded view of the magnetic driving apparatus shown in FIG. 1;
FIG. 3 is a perspective view of the magnetic driving apparatus in another position than shown in FIG. 1;
FIG. 4 is a side view of the magnetic driving apparatus in the position shown in FIGS. 1 and 2;
FIG. 5 is a side view of the magnetic driving apparatus in the position shown in FIG. 3;
FIG. 6 is a perspective view of a magnetic driving apparatus according to the second embodiment of the present invention;
FIG. 7 is a perspective view of a magnetic driving apparatus according to the third embodiment of the present invention;
FIG. 8 is a perspective view of a magnetic driving apparatus according to the fourth embodiment of the present invention;
FIG. 9 is a perspective view of a magnetic driving apparatus according to the fifth embodiment of the present invention; and
FIG. 10 is a perspective view of a magnetic driving apparatus according to the sixth embodiment of the present invention.

### DETAILED DESCRIPTION OF EMBODIMENTS

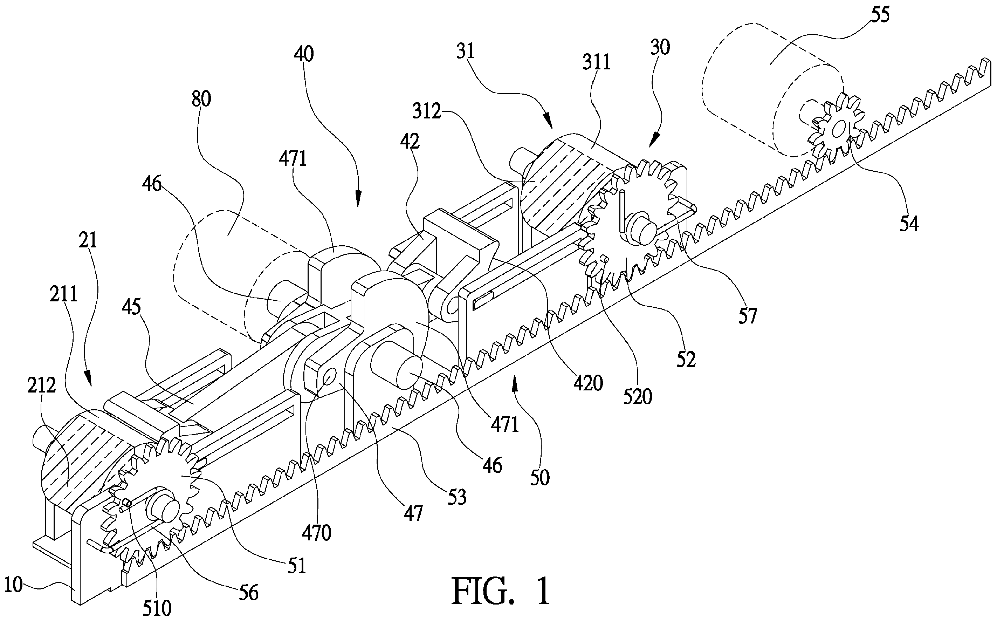

Referring to FIG. 1, a magnetic driving apparatus includes a base 10, an active magnetic unit 20, an active magnetic unit 30, a passive magnetic unit 40, and a pole-switching unit 50 according to the present invention. The active magnetic unit 20, the active magnetic unit 30 and the passive magnetic unit 40 are evenly located on and connected to the base 10. The passive magnetic unit 40 is located between the active magnetic unit 20 and the active magnetic unit 30. The active magnetic unit 20 exerts magnetic push on the passive magnetic unit 40 when the active magnetic unit 30 exerts magnetic attraction on the passive magnetic unit 40. Then, the pole-switching unit 50 switches magnetic poles of the active magnetic units 20 and 30 synchronously. Accordingly, the active magnetic unit 20 exerts magnetic attraction on the passive magnetic unit 40 when the active magnetic unit 30 exerts magnetic push on the passive magnetic unit 40. The passive magnetic unit 40 is reciprocated between the active magnetic units 20 and 30 without contact with one another. The passive magnetic unit 40 drives the output unit 80 such as a generator or a gearbox (or "transmission").

Referring to FIGS. 1 through 5, according to a first embodiment of the present invention, the base 10 is U-shaped in a cross-sectional view. The base 10 includes various sections for supporting the active magnetic unit 20 and 30, the passive magnetic unit 40 and the pole-switching unit 50. The active magnetic units 20 and 30 are the same in structure but their positions on the base 10 are different.

The active magnetic unit 20 includes a rotational magnet 21 connected to an axle 22 rotationally connected to the base 10. Thus, the rotational magnet 21 and the axle 22 are synchronously rotatable on the base 10. The rotational magnet 21 includes a first magnetic pole 211 (N or S) and a second magnetic pole 212 (S or N).

The active magnetic unit 30 includes a rotational magnet 31 connected to an axle 32 rotationally connected to the base 10. Thus, the rotational magnet 31 and the axle 32 are synchronously rotatable on the base 10. The rotational magnet 31 includes a first magnetic pole 311 (N or S) and a second magnetic pole (S or N).

The rotational magnets 21 and 31 are in the form of a rod, a disc, or a drum. In a phase of an operation, the first magnetic pole 211 of the magnet 20 is pointed at the passive magnetic unit 40 when the first magnetic pole 311 of the magnet pole 30 is pointed away from the passive magnetic unit 40. In a next period of the operation, the second magnetic pole 212 of the magnet 20 is pointed at the passive magnetic unit 40 when the second magnetic pole 312 of the magnet pole 30 is pointed away from the passive magnetic unit 40. These phases take place alternately.

The passive magnetic unit 40 includes a swinging rod 41, a swinging rod 42 and a crankshaft unit 43. The swinging rods 41 and 42 are reciprocated on the base 10. A slidable magnet 410 is connected to the swinging rod 41. A slidable magnet 420 is connected to the swinging rod 42. Each of the slidable magnets 410 and 420 includes a first magnetic pole (N or S) and a second magnetic pole (S or N). The first magnetic pole of the slidable magnet 410 is pointed at the magnet 20 and the first magnetic pole of the slidable magnet 420 is pointed at the magnet 30. Alternatively, the second magnetic pole of the slidable magnet 410 is pointed at the magnet 20 and the second magnetic pole of the slidable magnet 420 is pointed at the magnet 30.

The shaft unit 43 turns the reciprocated translation of the swinging rods 41 and 42 into rotation of the output unit 80. The crank shaft unit 43 includes two swinging rods 44 and 45, two cranks 47 and two crankshafts 46. The swinging rod 44 includes a first end pivotally connected to the swinging rod 41. The swinging rod 45 includes a first end pivotally connected to the swinging rod 42. The cranks 47 are pivotally connected to a second end of each of the swinging rods 44 and 45 by a pin 470. Preferably, the second end of the swinging rod 45 is formed with two branches (not numbered) located on two opposite sides of the second end of the swinging rod 45. Each of the cranks 47 is formed with a weight 471. The weights 471 are used to render rotation of the cranks 47 smooth. Each of the crankshafts 46 is connected to a corresponding one of the cranks 47. The crankshafts 46 are rotationally connected to the base 10.

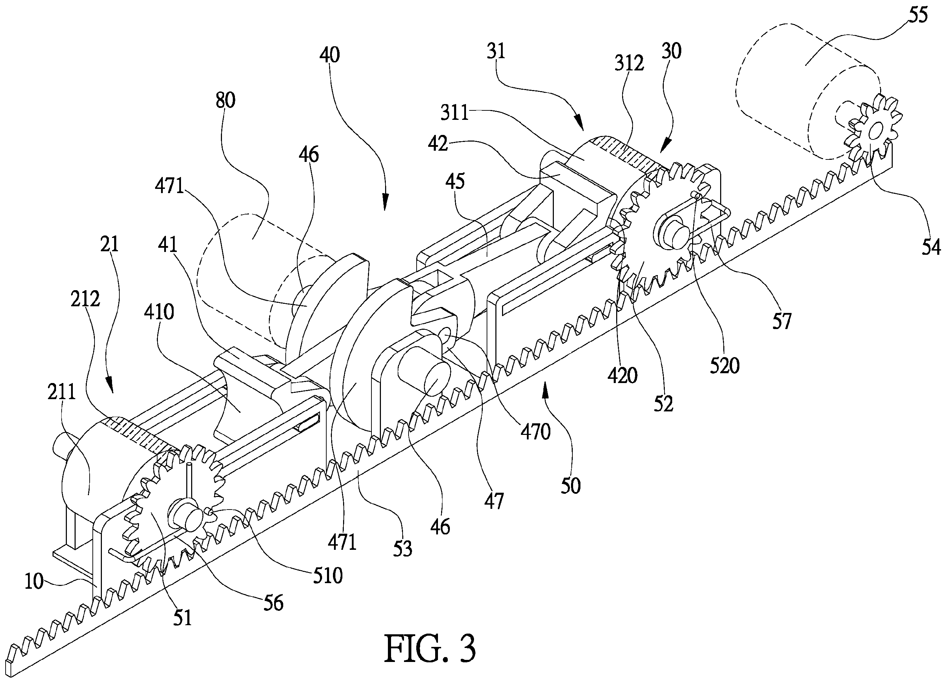

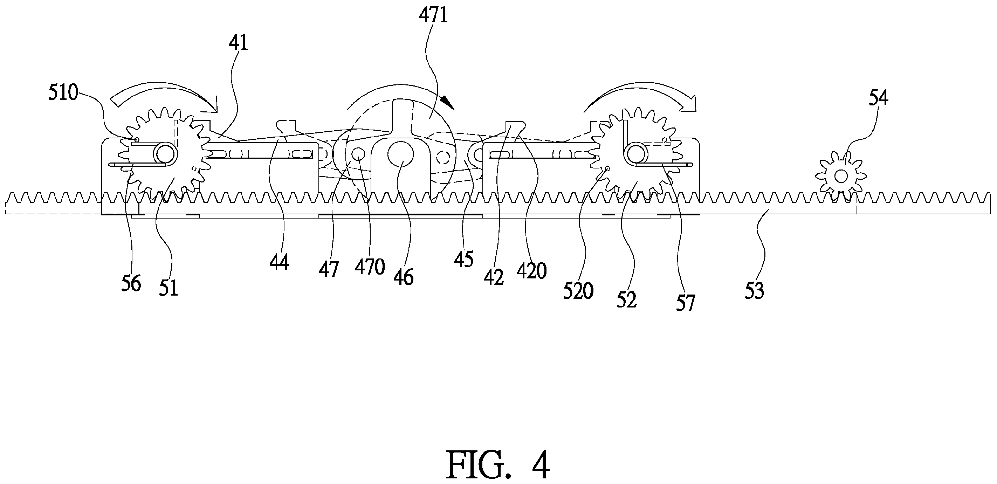

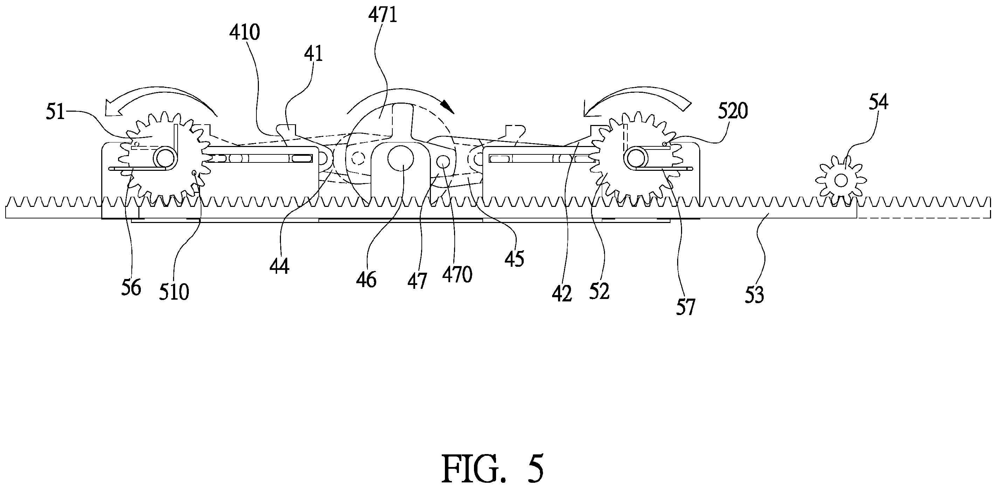

The pole-switching unit 50 includes three gears 51, 52 and 54, a rack 53, a motor 55 and two springs 56 and 57. The gears 51 and 52 are connected to the axles 22 and 32 of the the rotational magnets 21 and 31. The gear 54 is connected to a mandrel (not numbered) of the motor 55. The gears 51, 52 and 54 are engaged with the rack 53. Preferably, the motor 55 is a servomotor operable to alternately rotate in two opposite directions. The motor 55 reciprocates the rack 53 via the gear 54. The rack 53 rotates the rotational magnets 21 and 31 alternately in opposite directions via the gears 56 and 57, respectively. The pole-switch unit 50 rotate the active magnetic units 20 and 30 between a first angle shown in FIGS. 1 and 4 and a second angle shown in FIGS. 3 and 5.

Each of the springs 56 and 57 is a torque spring including a helical middle section and two branches. The helical middle section of the spring 56 is mounted on the axle 22 of the rotational magnet 21 of the active magnetic unit 20. One of the branches of the spring 56 is abutted against a boss 510 extending from the gear 51 and the remaining one of the branches of the spring 56 is connected to the base 10. The helical middle section of the spring 57 is mounted on the axle 22 of the rotational magnet 21 of the active magnetic unit 20. One of the branches of the spring 57 is abutted against a boss 520 extending from the gear 52 and the remaining one of the branches of the spring 57 is connected to the base 10. The springs 56 and 57 are arranged so that they are alternately deformed and store energy when the rotational magnets 21 and 31 are alternately directed away from the passive magnetic unit 40 for example.

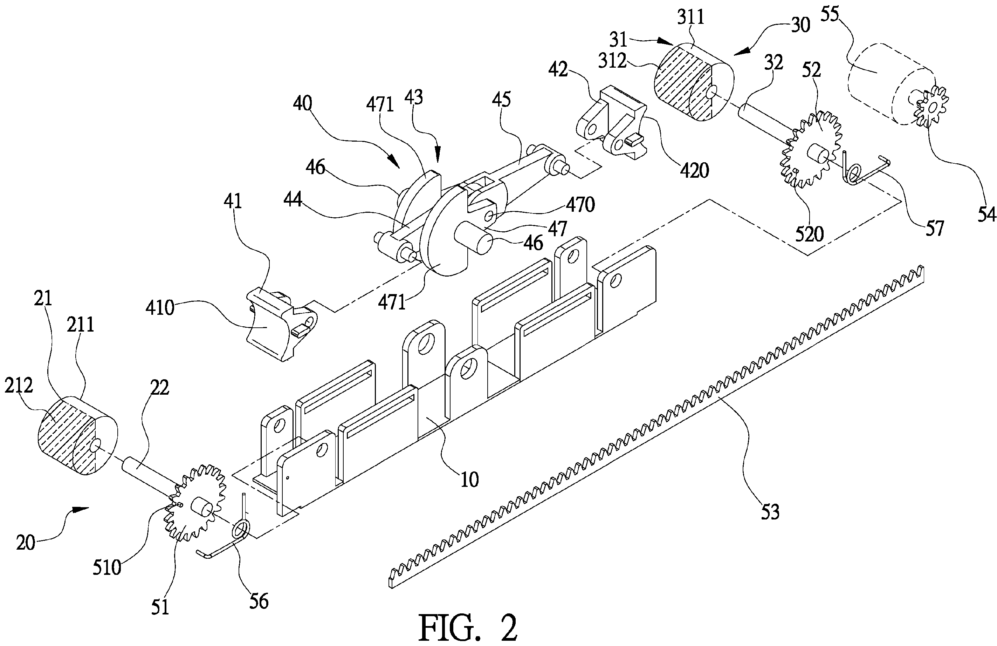

Referring to FIGS. 1 and 4, at the first angle, the first magnetic pole 211 of the rotational magnet 21 faces the first magnetic pole of the first slidable magnet 410 to provide magnetic push. The second magnetic pole 312 of the rotational magnet 31 faces the first magnetic pole of the second slidable magnet 420 to provide magnetic attraction. Thus, the active magnetic unit 20 tends to push the swinging rod 41 while the active magnetic unit 30 tends to attract the swinging rod 42. Thus, the active magnetic units 20 and 30 tend to move the passive magnetic unit 40 to the position shown in FIGS. 2 and 5 from the position shown in FIGS. 1 and 4. The spring 56 is loaded and tends to rotate the rotational magnet 21 to the angle shown in FIGS. 2 and 5 from the angle shown in FIGS. 1 and 4.

Referring to FIGS. 3 and 5, at the second angle, the second magnetic pole 212 of the rotational magnet 21 faces the first magnetic pole of the first slidable magnet 410 to provide magnetic attraction. The first magnetic pole 311 of the rotational magnet 31 faces the first magnetic pole of the second slidable magnet 420 to provide magnetic push. Thus, the active magnetic unit 20 tends to attract the swinging rod 41 while the active magnetic unit 30 tends to push the swinging rod 42. Thus, the active magnetic units 20 and 30 tend to move the passive magnetic unit 40 to the position shown in FIGS. 1 and 4 from the position shown in FIGS. 2 and 5. The spring 56 is loaded and tends to rotate the rotational magnet 21 to the angle shown in FIGS. 1 and 4 from the angle shown in FIGS. 2 and 5.

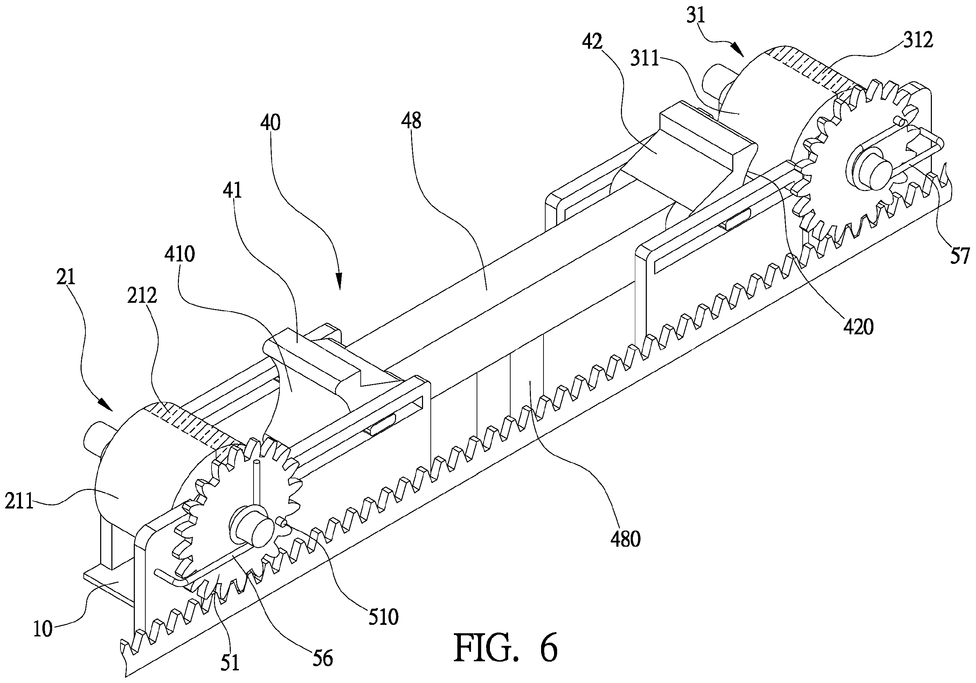

Referring to FIG. 6, according to a second embodiment of the present invention, the passive magnetic unit 40 includes a connector 48 instead of the crankshaft unit 43. The connector 48 includes two ends connected to the swinging rods 41 and 42, respectively. The connector 48 is formed with an output portion 480 that is reciprocated like the swinging rods 41 and 42.

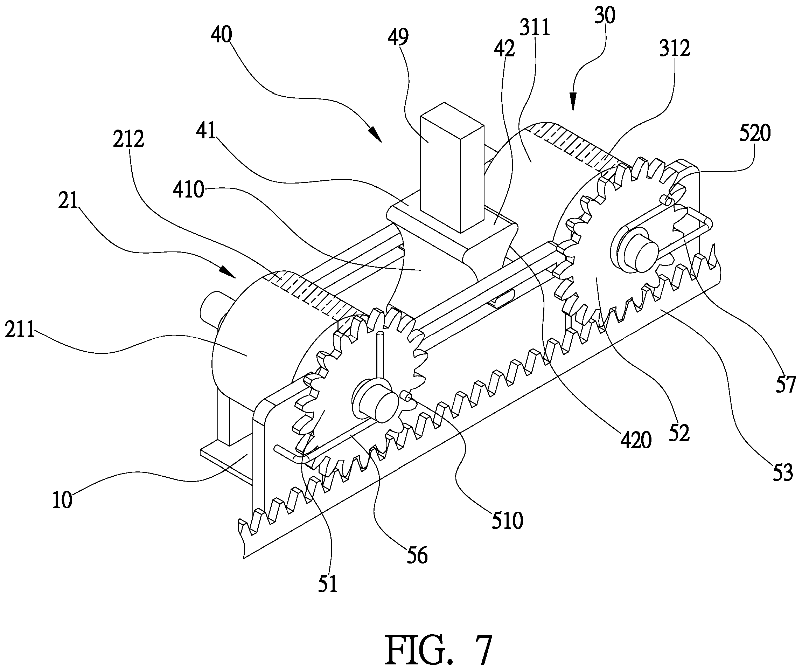

Referring to FIG. 7, according to a third embodiment of the present invention, the passive magnetic unit 40 includes nothing but an output portion 49 in addition to the swinging rods 41 and 42, and the swinging rods 41 and 42 are made in one piece. Thus, the output portion 49 is reciprocated like the swinging rods 41 and 42.

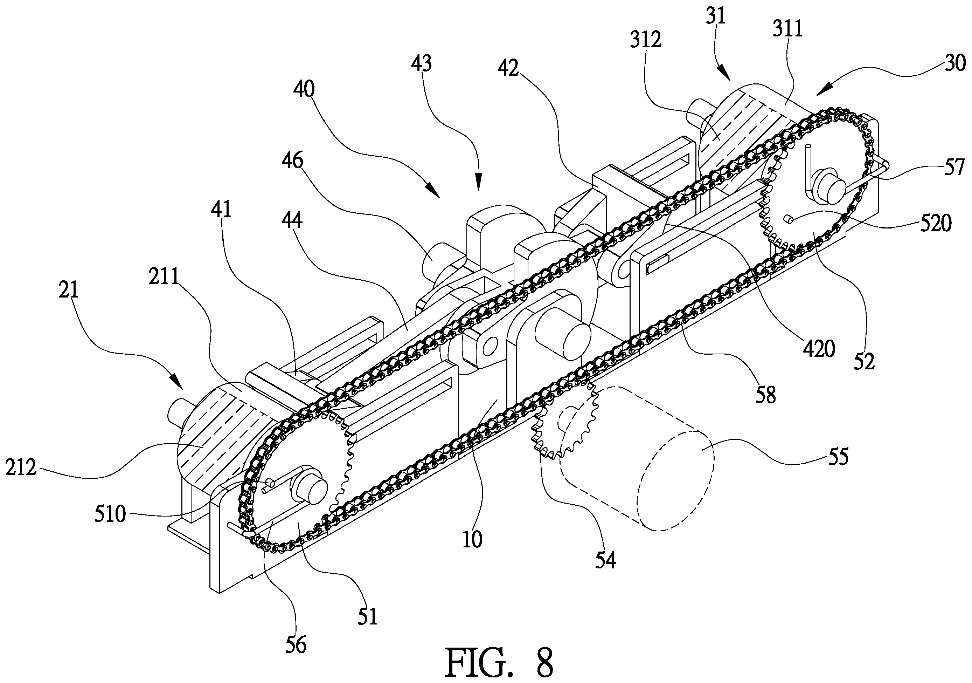

Referring to FIG. 8, according to a fourth embodiment of the present invention, the pole-switching unit 50 includes a chain 53 instead of the rack 53. The chain 53 is engaged with the gears 51, 52 and 54. The motor 55 is rotatable in only one direction.

It should be noted that the gears 51 and 52 can be replaced with pulleys and the chain 53 can be replaced with a belt wound around the pulleys. In fact, any other transmission can be used to transmit the rotation of the motor 55 to the rotation of the rotational magnets 21 and 31.

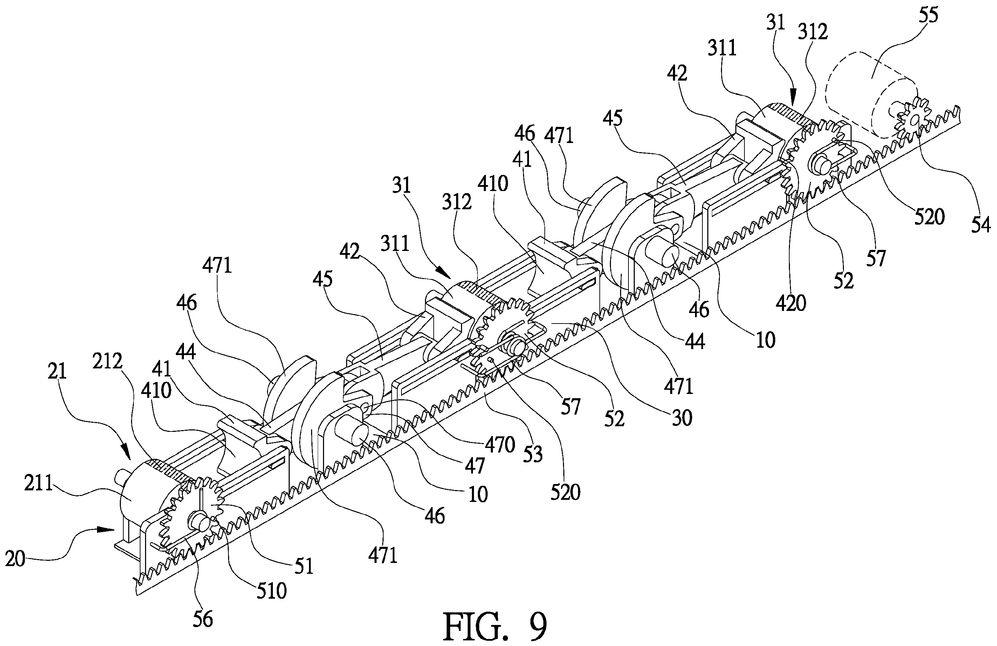

Referring to FIG. 9, a magnetic driving apparatus according to a fifth embodiment of the present invention is like the first embodiment of the present invention except for four things. Firstly, at least one intermediate active magnetic unit 30 (or 20) is located between the active magnetic units 20 and 30 shown in FIGS. 1 through 5. The active magnetic units 20 and 30 shown in FIGS. 1 through 5 will be referred to as the "terminal active magnetic units" for clarity of the following description. Secondly, at least one more passive magnetic unit 40 is used. One of the passive magnetic units 40 is located between the terminal active magnetic unit 20 and the intermediate active magnetic unit 30. The remaining one of the passive magnetic units 40 is located between the intermediate and terminal active magnetic units 30. Thirdly, at least one intermediate gear 52 (or 51) is connected to the intermediate active magnetic unit 30 and engaged with the rack 53. The intermediate gear 52 is formed with two bosses 510 and 520. Fourthly, two springs 56 and 57 are used to abut against the bosses 510 and 520, respectively.

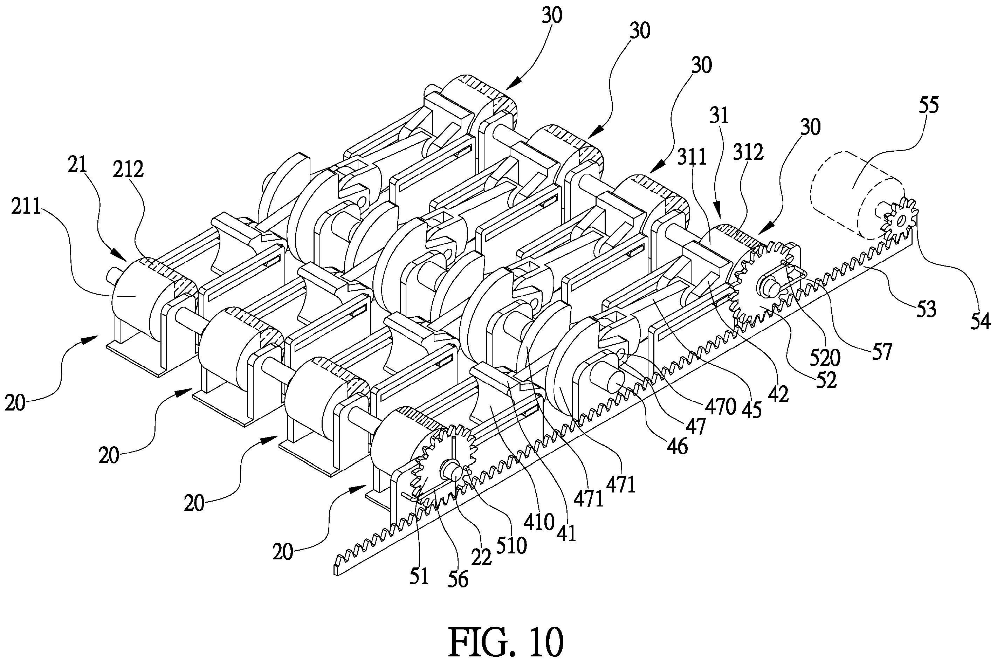

Referring to FIG. 10, a magnetic driving apparatus 10 according to a sixth embodiment of the present invention is like the first embodiment of the present invention except for including more combinations of the active magnetic units 20 and 30 with the passive magnetic unit 40. Only one of the combinations is connected to the pole-switching unit 50. The rotational magnets 21 of the active magnetic units 20 of the combinations are coaxially connected to one another. The rotational magnets 31 of the active magnetic units 30 of the combinations are coaxially connected to one another.

The present invention has been described via the illustration of the embodiments. Those skilled in the art can derive variations from the embodiments without departing from the scope of the present invention defined in the claims. Therefore, the embodiments shall not limit the scope of the present invention defined in the claims.

## Claims

1. A magnetic driving apparatus comprising:
a base (10);
a first active magnetic unit (20) comprising a rotational magnet (21) formed with a first magnetic pole (211) and a second magnetic pole (212);
a second active magnetic unit (30) comprising a rotational magnet (31) formed with a first magnetic pole (311) and a second magnetic pole (312);
a passive magnetic unit (40) comprising:
a first slidable magnet (410) formed with a first magnetic pole facing the first active magnetic unit (20); and
a second slidable magnet (420) formed with a first magnetic pole facing the second active magnetic unit (30), wherein the first magnetic pole (211) of the rotational magnet (21) of the first active magnetic unit (20) exerts magnetic push on the first magnetic pole of the first slidable magnet (410) while the second magnetic pole (312) of the rotational magnet (31) of the second active magnetic unit (30) exerts magnetic attraction on the first magnetic pole of the second slidable magnet (420), and wherein the second magnetic pole (212) of the rotational magnet (21) of the first active magnetic unit (20) exerts magnetic attraction on the first magnetic pole of the first slidable magnet (410) while the first magnetic pole (311) of the rotational magnet (31) of the second active magnetic unit (30) exerts magnetic push on the first magnetic pole of the second slidable magnet (420); and
a pole-switching unit (50) comprising:
a motor (55) connected to the base (10); and
a transmission for transmitting rotation of the motor (55) to the first and second rotational magnets (21, 31), wherein each of the first and second active magnetic units (20, 30) further comprises an axle connected to the rotational magnet (21, 31), wherein a first following gear (51) of the pole-switching unit (50) is connected to the axle of the first active magnetic unit (20), and wherein a second following gear (52) of the pole-switching unit (50) is connected to the axle of the second active magnetic unit (30)
**characterized in that**
the pole-switching unit (50) further comprises:
a first spring (56) comprising a helical portion mounted on the axle of the first active magnetic unit (20), a branch connected to the first following gear (51), and another branch connected to the base (10),
wherein the first spring (56) is loaded when the rotational magnets (21, 31) are at a first angle; and
a second spring (57) comprising a helical portion mounted on the axle of the second active magnetic unit (30), a branch connected to the second following gear (52), and another branch connected to the base (10), wherein the second spring (57) is loaded when the rotational magnets (21, 31) are at a second angle.

2. The magnetic driving apparatus according to claim 1, wherein the pole-switching unit (50) further comprises:
the first spring (56) arranged between the first following gear (51) and the base (10); and
the second spring (57) arranged between the second following gear (52) and the base (10).

3. The magnetic driving apparatus according to claim 1, wherein the transmission further comprises
a rack (53) engaged with a leading gear (54) and the first and second following gears (51, 52) so that the motor (55) rotates the rotational magnets (21, 31).

4. The magnetic driving apparatus according to claim 1, wherein the rotational magnet (21, 31) of each of the first and second active magnetic units (20, 30) is in the form of a drum formed with a first semicircular portion as the first magnetic pole (211, 311) and a second semicircular portion as the second magnetic pole (212, 312).

5. The magnetic driving apparatus according to claim 1, wherein the passive magnetic unit (40) further comprises:
a first swinging rod (41) formed with an end connected to the first active magnetic unit (20); and
a second swinging rod (42) formed with an end connected to the second active magnetic unit (30).

6. The magnetic driving apparatus according to claim 5, wherein the passive magnetic unit (40) further comprises a crank shaft unit (43) connected to an opposite end of each of the first and second swinging rods (41, 42) so that reciprocation of the first and second swinging rods (41, 42) is converted to rotation of the crank shaft unit (43).

7. The magnetic driving apparatus according to claim 5, wherein the passive magnetic unit (40) further comprises a connector (48) comprising two ends respectively connected to the first and second slidable magnets (410, 420).

8. The magnetic driving apparatus according to claim 1, wherein the transmission further comprises
a chain (53) engaged with a leading gear (54) and the first and second following gears (51, 52) so that the motor (55) rotates the rotational magnets (21, 31).

9. The magnetic driving apparatus according to claim 1, further comprising:
at least a third active magnetic unit located between the first and second active magnetic units (20, 30); and
at least another passive magnetic unit (40) connected to the base (10), so that each of the passive magnetic units (40) is located between two adjacent ones of the active magnetic units (20, 30).

10. A magnetic driving apparatus according to claim 1, further comprising magnetic assemblies,
wherein the bases of the magnetic assemblies are in parallel to one another,
wherein the rotational magnets (21) of the first active magnetic units (20) of the magnetic assemblies are coaxially connected to one another,
wherein the rotational magnets (31) of the second active magnetic units (30) of the magnetic assemblies are coaxially connected to one another.

## Patentansprüche

1. Magnetische Antriebsvorrichtung, welche umfasst:
eine Basis (10);
eine erste aktive Magneteinheit (20), die einen Rotationsmagneten (21) umfasst, der mit einem ersten Magnetpol (211) und einem zweiten Magnetpol (212) ausgebildet ist;
eine zweite aktive Magneteinheit (30), die einen Rotationsmagneten (31) umfasst, der mit einem ersten Magnetpol (311) und einem zweiten Magnetpol (312) ausgebildet ist;
eine passive Magneteinheit (40), welche umfasst:
einen ersten verschiebbaren Magneten (410), der mit einem ersten Magnetpol ausgebildet ist, der der ersten aktiven Magneteinheit (20) zugewandt ist; und
einen zweiten verschiebbaren Magneten (420), der mit einem ersten Magnetpol ausgebildet ist, der der zweiten aktiven Magneteinheit (30) zugewandt ist, wobei der erste Magnetpol (211) des Rotationsmagneten (21) der ersten aktiven Magneteinheit (20) magnetischen Druck auf den ersten Magnetpol des ersten verschiebbaren Magneten (410) ausübt, während der zweite Magnetpol (312) des Rotationsmagneten (31) der zweiten aktiven Magneteinheit (30) eine magnetische Anziehung auf den ersten Magnetpol des zweiten verschiebbaren Magneten (420) ausübt, und wobei der zweite Magnetpol (212) des Rotationsmagneten (21) der ersten aktiven Magneteinheit (20) eine magnetische Anziehung auf den ersten Magnetpol des ersten verschiebbaren Magneten (410) ausübt, während der erste Magnetpol (311) des Rotationsmagneten (31) der zweiten aktiven Magneteinheit (30) einen magnetischen Druck auf den ersten Magnetpol des zweiten verschiebbaren Magneten (420) ausübt; und
eine Polumschalteinheit (50), die umfasst:
einen Motor (55), der mit der Basis (10) verbunden ist; und
ein Getriebe zum Übertragen der Drehung des Motors (55) auf den ersten und den zweiten Rotationsmagneten (21, 31), wobei jede der ersten und der zweiten aktiven Magneteinheit (20, 30) ferner eine Achse umfasst, die mit dem Rotationsmagneten (21, 31) verbunden ist, wobei ein erstes Folgezahnrad (51) der Polumschalteinheit (50) mit der Achse der ersten aktiven Magneteinheit (20) verbunden ist, und wobei ein zweites Folgezahnrad (52) der Polumschalteinheit (50) mit der Achse der zweiten aktiven Magneteinheit (30) verbunden ist,
**dadurch gekennzeichnet, dass**
die Polumschalteinheit (50) ferner umfasst:
eine erste Feder (56), welche einen an der Achse der ersten aktiven Magneteinheit (20) montierten spiralförmigen Abschnitt, einen mit dem ersten Folgezahnrad (51) verbundenen Ast und einen weiteren, mit der Basis (10) verbundenen Ast umfasst, wobei die erste Feder (56) gespannt ist, wenn die Rotationsmagneten (21, 31) in einem ersten Winkel sind; und
eine zweite Feder (57), welche einen an der Achse der zweiten aktiven Magneteinheit (30) montierten spiralförmigen Abschnitt, einen mit dem zweiten Folgezahnrad (52) verbundenen Ast und einen weiteren, mit der Basis (10) verbundenen Ast umfasst, wobei die zweite Feder (57) gespannt ist, wenn die Rotationsmagneten (21, 31) in einem zweiten Winkel sind.

2. Magnetische Antriebsvorrichtung nach Anspruch 1, bei welcher die Polumschalteinheit (50) ferner umfasst:
die erste Feder (56), die zwischen dem ersten Folgezahnrad (51) und der Basis (10) angeordnet ist; und
die zweite Feder (57), die zwischen dem zweiten Folgezahnrad (52) und der Basis (10) angeordnet ist.

3. Magnetische Antriebsvorrichtung nach Anspruch 1, bei welcher das Getriebe ferner umfasst
eine Zahnstange (53), die mit einem Führungszahnrad (54) und dem ersten und dem zweiten Folgezahnrad (51, 52) in Eingriff steht, sodass der Motor (55) die Rotationsmagneten (21, 31) dreht.

4. Magnetische Antriebsvorrichtung nach Anspruch 1, bei welcher der Rotationsmagnet (21, 31) von jeder der ersten und zweiten aktiven Magneteinheit (20, 30) die Form einer Trommel aufweist, die mit einem ersten halbkreisförmigen Abschnitt als der erste Magnetpol (211, 311) und einem zweiten halbkreisförmigen Abschnitt als der zweite Magnetpol (212, 312) ausgebildet ist.

5. Magnetische Antriebsvorrichtung nach Anspruch 1, bei welcher die passive Magneteinheit (40) ferner umfasst:
eine erste Schwenkstange (41), die mit einem Ende ausgebildet ist, das mit der ersten aktiven Magneteinheit (20) verbunden ist; und
eine zweite Schwenkstange (42), die mit einem Ende ausgebildet ist, das mit der zweiten aktiven Magneteinheit (30) verbunden ist.

6. Magnetische Antriebsvorrichtung nach Anspruch 5, bei welcher die passive Magneteinheit (40) ferner eine Kurbelwelleneinheit (43) umfasst, die mit einem gegenüberliegenden Ende von jeder der ersten und zweiten Schwenkstange (41, 42) verbunden ist, sodass eine Hin- und Herbewegung der ersten und der zweiten Schwenkstange (41, 42) in eine Drehbewegung der Kurbelwelleneinheit (43) umgewandelt wird.

7. Magnetische Antriebsvorrichtung nach Anspruch 5, bei welcher die passive Magneteinheit (40) ferner einen Verbinder (48) umfasst, der zwei Enden aufweist, die jeweils mit dem ersten und dem zweiten verschiebbaren Magneten (410, 420) verbunden sind.

8. Magnetische Antriebsvorrichtung nach Anspruch 1, bei welcher das Getriebe ferner umfasst
eine Kette (53), die mit einem Führungszahnrad (54) und dem ersten und dem zweiten Folgezahnrad (51, 52) in Eingriff steht, sodass der Motor (55) die Rotationsmagneten (21, 31) dreht.

9. Magnetische Antriebsvorrichtung nach Anspruch 1, welche ferner umfasst:
mindestens eine dritte aktive Magneteinheit, die sich zwischen der ersten und der zweiten aktiven Magneteinheit (20, 30) befindet; und
mindestens eine weitere passive Magneteinheit (40), die mit der Basis (10) verbunden ist, sodass sich jede der passiven Magneteinheiten (40) zwischen zwei benachbarten der aktiven Magneteinheiten (20, 30) befindet.

10. Magnetische Antriebsvorrichtung nach Anspruch 1, welche ferner Magnetbaugruppen umfasst,
wobei die Basen der Magnetbaugruppen parallel zueinander sind,
wobei die Rotationsmagneten (21) der ersten aktiven Magneteinheiten (20) der Magnetbaugruppen koaxial miteinander verbunden sind,
wobei die Rotationsmagneten (31) der zweiten aktiven Magneteinheiten (30) der Magnetbaugruppen koaxial miteinander verbunden sind.

## Revendications

1. Appareil d'entraînement magnétique comprenant :
une base (10) ;
une première unité magnétique active (20) comprenant un aimant rotatif (21) pourvu d'un premier pôle magnétique (211) et d'un second pôle magnétique (212) ;
une deuxième unité magnétique active (30) comprenant un aimant rotatif (31) pourvu d'un premier pôle magnétique (311) et d'un second pôle magnétique (312) ;
une unité magnétique passive (40) comprenant :
un premier aimant coulissant (410) pourvu d'un premier pôle magnétique faisant face à la première unité magnétique active (20) ; et
un second aimant coulissant (420) pourvu d'un premier pôle magnétique faisant face à la deuxième unité magnétique active (30), dans lequel le premier pôle magnétique (211) de l'aimant rotatif (21) de la première unité magnétique active (20) exerce une poussée magnétique sur le premier pôle magnétique du premier aimant coulissant (410), en même temps que le second pôle magnétique (312) de l'aimant rotatif (31) de la deuxième unité magnétique active (30) exerce une attraction magnétique sur le premier pôle magnétique du second aimant coulissant (420), et dans lequel le second pôle magnétique (212) de l'aimant rotatif (21) de la première unité magnétique active (20) exerce une attraction magnétique sur le premier pôle magnétique du premier aimant coulissant (410), en même temps que le premier pôle magnétique (311) de l'aimant rotatif (31) de la deuxième unité magnétique active (30) exerce une poussée magnétique sur le premier pôle magnétique du second aimant coulissant (420) ; et
une unité de commutation de pôles (50) comprenant :
un moteur (55) relié à la base (10) ; et
une transmission pour transmettre la rotation du moteur (55) aux premier et second aimants rotatifs (21, 31), dans lequel chacune des première et deuxième unités magnétiques actives (20, 30) comprend en outre un axe relié à l'aimant rotatif (21, 31), dans lequel une première roue dentée menée (51) de l'unité de commutation de pôles (50) est reliée à l'axe de la première unité magnétique active (20), et dans lequel une seconde roue dentée menée (52) de l'unité de commutation de pôles (50) est reliée à l'axe de la deuxième unité magnétique active (30),
**caractérisé en ce que**
l'unité de commutation de pôles (50) comprend en outre :
un premier ressort (56) comprenant une partie hélicoïdale montée sur l'axe de la première unité magnétique active (20), une branche reliée à la première roue dentée menée (51) et une autre branche reliée à la base (10), dans lequel le premier ressort (56) est chargé lorsque les aimants rotatifs (21, 31) forment un premier angle ; et
un second ressort (57) comprenant une partie hélicoïdale montée sur l'axe de la deuxième unité magnétique active (30), une branche reliée à la seconde roue dentée menée (52), et une autre branche reliée à la base (10), dans lequel le second ressort (57) est chargé lorsque les aimants rotatifs (21, 31) forment un second angle.

2. Appareil d'entraînement magnétique selon la revendication 1, dans lequel l'unité de commutation de pôles (50) comprend en outre :
le premier ressort (56) agencé entre la première roue dentée menée (51) et la base (10) ; et
le second ressort (57) agencé entre la seconde roue dentée menée (52) et la base (10).

3. Appareil d'entraînement magnétique selon la revendication 1, dans lequel la transmission comprend en outre une crémaillère (53) en prise avec une roue dentée primaire (54) et les première et seconde roues dentées menées (51, 52) de sorte que le moteur (55) fasse tourner les aimants rotatifs (21, 31).

4. Appareil d'entraînement magnétique selon la revendication 1, dans lequel l'aimant rotatif (21, 31) de chacune des première et deuxième unités magnétiques actives (20, 30) se présente sous forme de tambour pourvu d'une première partie semi-circulaire en tant que premier pôle magnétique (211, 311) et d'une seconde partie semi-circulaire en tant que second pôle magnétique (212, 312).

5. Appareil d'entraînement magnétique selon la revendication 1, dans lequel l'unité magnétique passive (40) comprend en outre :
une première tige oscillante (41) pourvue d'une extrémité reliée à la première unité magnétique active (20) ; et
une seconde tige oscillante (42) pourvue d'une extrémité reliée à la deuxième unité magnétique active (30).

6. Appareil d'entraînement magnétique selon la revendication 5, dans lequel l'unité magnétique passive (40) comprend en outre une unité vilebrequin (43) reliée à une extrémité opposée de chacune des première et seconde tiges oscillantes (41, 42) de sorte que le mouvement de va-et-vient des première et seconde tiges oscillantes (41, 42) soit converti en rotation de l'unité vilebrequin (43).

7. Appareil d'entraînement magnétique selon la revendication 5, dans lequel l'unité magnétique passive (40) comprend en outre un connecteur (48) comprenant deux extrémités respectivement reliées aux premier et second aimants coulissants (410, 420).

8. Appareil d'entraînement magnétique selon la revendication 1, dans lequel la transmission comprend en outre une chaîne (53) en prise avec une roue dentée primaire (54) et les première et seconde roues dentées menées (51, 52) de sorte que le moteur (55) fasse tourner les aimants rotatifs (21, 31).

9. Appareil d'entraînement magnétique selon la revendication 1, comprenant en outre :
au moins une troisième unité magnétique active située entre les première et deuxième unités magnétiques actives (20, 30) ; et
au moins une autre unité magnétique passive (40) reliée à la base (10), de sorte que chacune des unités magnétiques passives (40) soit située entre deux unités adjacentes des unités magnétiques actives (20, 30).

10. Appareil d'entraînement magnétique selon la revendication 1, comprenant en outre des ensembles magnétiques,
dans lequel les bases des ensembles magnétiques sont parallèles les unes aux autres,
dans lequel les aimants rotatifs (21) des premières unités magnétiques actives (20) des ensembles magnétiques sont reliés coaxialement les uns aux autres,
dans lequel les aimants rotatifs (31) des deuxièmes unités magnétiques actives (30) des ensembles magnétiques sont reliés coaxialement les uns aux autres.
